# EUROPÄISCHE PATENTSCHRIFT

(11) **EP 3 053 678 B1**
(45) Veröffentlichungstag und Bekanntmachung des Hinweises auf die Patenterteilung: **01.08.2018**
(21) Anmeldenummer: 16154532.2
(22) Anmeldetag: 05.02.2016
(51) Int. Cl.: B22F 3/105, B22F 5/00, B22F 7/08, B30B 9/32, B22F 5/08, B22F 3/00, B22F 3/03, B23K 26/34, B30B 15/06

(54) **METALLISCHES VERSCHLEISSBLECH ODER METALLISCHE DRUCKPLATTE MIT PROFILIERTER OBERFLÄCHE FÜR PAKETIERPRESSEN, VERFAHREN ZU DEREN HERSTELLUNG UND PAKETIERPRESSE**
METAL WEAR SHEET OR PRESSURE PLATE FOR PACKING PRESSES CONTAINING CONTOURED SURFACE, MANUFACTURING METHOD THEREOF AND PACKING PRESS
TOLE D'USURE METALLIQUE OU PLATEAU DE COMPACTION AYANT UNE SURFACE PROFILEE POUR PRESSES A PAQUETER, PROCEDE DE FABRICATION DESDITS TOLE D'USURE OU PLATEAU DE COMPACTION, PRESSE A PAQUETER

(30) Priorität: 05.02.2015 DE 102015101686
(43) Veröffentlichungstag der Anmeldung: 10.08.2016
(73) Patentinhaber: Berkenhoff GmbH, 45711 Datteln (DE)
(72) Erfinder: BERKENHOFF, Andreas, 45711 Datteln (DE)
(74) Vertreter: Graefe, Jörg

(56) Entgegenhaltungen:
- EP-A1- 2 719 484
- DE-A1-102007 060 964
- DE-A1-102011 080 225
- DE-C1- 19 535 484
- Lindemann: "Lindemann EtaPress Scrap Baling Presses Lindemann Lindemann EtaPress Scrap Baling Presses 210 mm > Lindemann EtaPress Scrap Baling Presses", , 22. Juli 2009 (2009-07-22), XP055283823, Gefunden im Internet: URL:http://www.metso.com/recycling/mm_recy .nsf/WebWID/WTB-090702-22575-B96B1/$File/E TA_ENG_Ansicht.pdf [gefunden am 2016-06-27]
- Atm Recyclingsystems: "HIGH PERFORMANCE -METAL RECYCLING", , 1. Dezember 2013 (2013-12-01), XP055283634, Gefunden im Internet: URL:http://www.atm-recyclingsystems.com/fi leadmin/download/folder/ATM-Bro-ENG-Nov201 3-WEB.pdf [gefunden am 2016-06-24]

## Beschreibung

Die vorliegende Erfindung betrifft ein Verschleißblech oder eine Druckplatte mit profilierter Oberfläche für Paketierpressen sowie eine Paketierpresse mit einem erfindungsgemäßen Verschleißblech oder einer erfindungsgemäßen Druckplatte.

In Paketierpressen wird üblicherweise Schrott in drei Pressschritten zu einem quader- oder würfelförmigen Paket gepresst. Dazu wird, nachdem der Schrott in einen Aufnahmeraum der Presse eingefüllt wurde, ein Vorverdichter meist horizontal verschoben. Der Vorverdichter weist eine einteilige oder mehrteilige Druckplatte auf, die gegen den Schrott drückt. Dann erfolgt eine Zwischenverdichtung, bei der ein Zwischenverdichter meist senkrecht von oben nach unten verschoben wird, so dass sich ein länglicher Schrottquader ergibt. Auch der Zwischenverdichter weist eine ein- oder mehrteilige Druckplatte auf. Im letzten Schritt, der sogenannten Endverdichtung, wird der längliche Schrottquader meist horizontal und senkrecht zu den bisherigen Verdichtungsrichtungen zu einem Paket gepresst. Der dazu verwendete Endverdichter weist ebenfalls eine Druckplatte auf. Der Endverdichter wird dann zumeist auch noch als Auswerfer verwendet, um das Schrottpaket aus dem Aufnahmeraum zu entfernen.

In Paketierpressen werden für eine innere Auskleidung des Raumes, in welchen der zu pressende Schrott aufgenommen wird, so genannte Verschleißbleche eingesetzt. Diese Verschleißbleche sind im Betrieb der Presse einer besonderen mechanischen Beanspruchung ausgesetzt und nutzen sich im Vergleich zu anderen Komponenten der Presse schnell ab. Die Verschleißbleche werden daher regelmäßig ausgetauscht. Das gleiche gilt für die Druckplatten.

Häufig sind die Verschleißbleche mit einem Rillenprofil versehen. Das Rillenprofil kann durch im Querschnitt trapezförmige, dreieckige oder andere parallele Rillen gebildet werden. Auch Wellenprofile sind möglich. Diese Profilierung der Verschleißbleche macht es möglich, dass ein Pressstempel, der mit einem entsprechenden Profil versehene Flächen hat, in die Rillen der Verschleißbleche geführt wird.

Um hohe Standzeiten der Verschleißbleche zu erhalten, sind diese aus Metallen mit hohen Härtegraden hergestellt. Üblich sind beispielsweise Härtegrade (HBW) von 400 bis 500. Bekannte Bleche mit diesen Härtegraden sind beispielsweise Hardox 400, 450 oder 500 Bleche. Zur Herstellung des Profils werden diese harten Bleche auf einer Bettfräsmaschine bearbeitet. Das Fräsen der harten Bleche macht noch härtere Fräswerkzeuge notwendig, die im Vergleich zu Werkzeugen zur Bearbeitung von weicheren Werkstücken teuer sind. Außerdem ist das Fräsen der harten Bleche sehr zeitaufwendig.

Neben den Verschleißblechen, welche den mit dem zu pressenden Schrott zu befüllenden Raum von innen auskleiden, sind - wie bereits angemerkt - auch die Druckplatten einer Paketierpresse einem erhöhten Verschleiß ausgesetzt. Die Druckplatten sind die Platten, die zum Pressen des Schrottes mit meist hydraulischen Stempeln bewegt werden. Die Druckplatten haben eine erste Fläche, die gegen den Schrott gepresst wird. Dazu im Wesentlichen senkrecht hat eine Druckplatte in der Regel drei oder vier Seitenflächen, die gezahnt sind. Die Zahnung entspricht dem Rillenprofil der den Raum auskleidenden Bleche. Die Zahnung der Druckplatten kann dadurch im Wesentlichen formschlüssig in die Rillen der Auskleidungsbleche eingreifen. Dadurch ist es möglich, dass die Druckplatten senkrecht zu den Auskleidungsblechen ausgerichtet entlang der Rillen verschoben werden, um den Schrott zu pressen. Je nachdem, ob es sich um Druckplatten für einen Vorverdichter, Zwischenverdichter oder Endverdichter handelt, sind die Oberflächen, die gegen den Schrott gepresst werden, auch mit einem Rillenprofil versehen. Während die Druckplatten des Vorverdichters ein oder zwei unterschiedlich ausgerichtete Rillenprofile haben können, haben die Druckplatten der Zwischenverdichter ein Rillenprofil und die Druckplatten der Endverdichter kein Rillenprofil. Die Druckplatten der Vordichter und Zwischenverdichter haben Rillenprofile, weil beim Zwischenverdichten bzw. Endverdichten die Druckplatten der Zwischenverdichter bzw. Endverdichter führen. Verschleißbleche oder Druckplatte für Paketierpressen sind zum Beispiel in "Lindemann EtaPress Scrap Baling Presses" offenbart (http:// www.metso.com/recycling/mm_recy.nsf/WebWID/WTB-090702-22575-B96B1/$Fi|e/ ETA_ENG_Ansicht.pdf). Hier setzt die vorliegende Erfindung an.

Die Aufgabe wird erfindungsgemäß durch ein Verschleißblech oder eine Druckplatte mit profilierter Oberfläche für Paketierpressen gelöst, bei dem das Verschleißblech oder die Druckplatte einen Träger aus wenigstens einem ersten Metall oder einer ersten Metalllegierung und eine auf den Träger durch ein generatives Fertigungsverfahren aufgetragene und mit diesem fest verbundene äußere Schicht aus einem zweiten Metall bzw. einer zweiten Metalllegierung umfasst, wobei die äußere Schicht eine höhere Härte hat als der Träger und die profilierte Oberfläche des Verschleißblechs oder der Druckplatte durch eine Außenfläche der äußeren Schicht gebildet ist.

Es ist möglich, dass der Träger aus dem ersten Metall und die äußere Schicht aus dem zweiten Metall hergestellt sind. Ebenso ist es möglich, dass der Träger aus dem ersten Metall und die äußere Schicht aus der zweiten Metalllegierung hergestellt sind. Weiter ist es möglich, dass der Träger aus der ersten Metalllegierung und die äußere Schicht aus dem zweiten Metall hergestellt sind. Schließlich ist es auch möglich, dass der Träger aus der ersten Metalllegierung und die äußere Schicht aus dem zweiten Metall hergestellt sind.

Anders als die bisher bekannten Verschleißbleche ist das erfindungsgemäße Verschleißblech oder die erfindungsgemäße Druckplatte mehrschichtig aufgebaut und umfasst einen Träger und eine äußere Schicht, wobei nur die äußere Schicht aus einem festen oder hochfesten Metall bzw. einer hochfesten Metalllegierung hergestellt ist. Das für den Träger gewählte Material kann preiswerter sein als das für die äußere Schicht gewählte Material. Die äußere Schicht ist durch ein generatives Verfahren aufgetragen, bei dem ein zunächst loses Pulver aus einem zweiten Metall bzw. einer zweiten Metalllegierung dazu verwendet wird, die äußere Schicht auf dem Träger zu bilden. Durch das generative Verfahren wird aus dem Pulver die feste äußere Schicht aufgebaut, die mit dem Träger verbunden ist. Bei dem generativen Verfahren kann es sich um selektives Laserschmelzen, selektives Elektronenstrahlschmelzen oder selektives Lasersintern handeln. Derartige Verfahren werden häufig unter dem Begriff 3-D-Drucken zusammengefasst.

Der Träger kann ein- oder mehrschichtig sein.

Gemäß der Erfindung kann der Träger eine mit einem Profil versehene Fläche haben, auf die die äußere Schicht aufgetragen ist. Die äußere Schicht kann eine gleichmäßige Schichtstärke aufweisen. Die Oberflächenstruktur des fertigen Verschleißblechs oder der fertigen Druckplatte ist dann schon in dem Träger angelegt. Durch eine gleichmäßig starke äußere Schicht mit einer gleichmäßigen Schichtstärke wird der Träger gegen mechanische Beanspruchung geschützt. Das Volumen dieser äußeren Schicht, die durch das generative Verfahren womöglich zeitaufwändig aus möglicherweisen teuren Stoffen hergestellt wird, kann in einer solchen Ausführung der Erfindung reduziert werden, um Materialkosten zu sparen. Andererseits hat diese Ausführung der Erfindung einen Aufwand zu Profilierung des Trägers zur Folge.

Daher ist ebenso möglich, dass der Träger eine ebene Oberfläche hat, auf die die äußere Schicht aufgetragen ist, wobei das Profil der Oberfläche des Verschleißblechs oder der Druckplatte durch eine ungleichmäßige Schichtstärke der äußeren Schicht gebildet ist. Bei einer solchen Ausführung der Erfindung kann eine ebene (oder weitgehend ebene) Platte als Träger verwendet werden, deren Oberfläche nicht spanend bearbeitet werden muss, um die am späteren Verschleißblech oder die an der späteren Druckplatte vorgesehene Oberflächenstruktur anzulegen.

Gemäß der Erfindung kann das Profil, welches das Verschleißblech oder die Druckplatte hat, ein Wellenprofil, ein Trapezprofil, ein Dreiecksprofil oder eine Mischung aus mehreren Profilen, insbesondere den vorgenannten Profilen sein.

Gemäß der Erfindung kann ein erfindungsgemäßes Verschleißblech oder eine erfindungsgemäße Druckplatte durch ein generatives Fertigungsverfahren, bei dem ein Pulver aus einem zweiten Metall als äußere Schicht auf einem Träger aus einem ersten Metall aufgetragen werden.

Das erste Metall bzw. die erste Metalllegierung kann aus einem allgemeinen Baustahl sein. Das zweite Metall bzw. die zweite Metalllegierung kann aus einem verschleißfestem Material sein.

Der Träger kann eine Platte mit einer ebenen Oberfläche sein, auf welcher die äußere Schicht aufgetragen wird. Durch das generative Fertigen der äußeren Schicht kann das Verschleißblech oder die Druckplatte die profilierte Oberfläche erhalten. Ebenso kann der Träger eine profilierte Oberfläche haben, auf welcher die äußere Schicht mit einer gleichmäßigen Schichtstärke aufgetragen ist. Weitere Merkmale und Vorteile der vorliegenden Erfindung werden deutlich anhand der nachfolgenden Beschreibung von Ausführungsbeispielen unter Bezugnahme auf die beiliegenden Abbildungen. Darin zeigt:
- Fig. 1: einen Querschnitt durch ein erstes erfindungsgemäßes Verschleißblech,
- Fig. 2: einen Querschnitt durch ein zweites erfindungsgemäßes Verschleißblech und
- Fig. 3: eine Frontansicht einer Druckplatte eines Endverdichters.

Die beiden in den Figuren dargestellten Verschleißbleche weisen einen Träger 1 und eine äußere Schicht 2 auf, die durch ein generatives Fertigungsverfahren auf den Träger 1 aufgebracht ist.

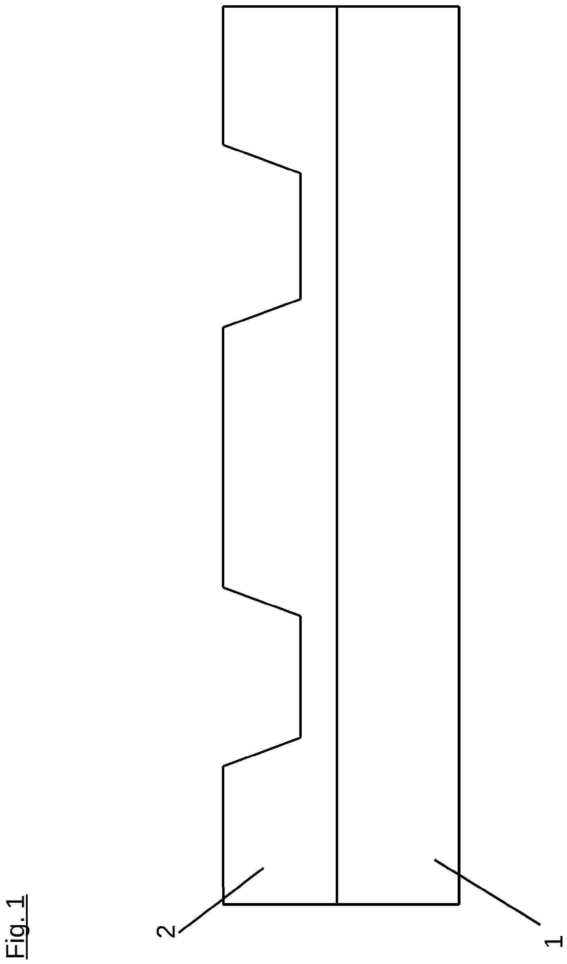

Im Beispiel gemäß Fig. 1 ist auf eine ebene Fläche des Trägers 1 durch das generative Verfahren die äußere Schicht aufgetragen, wobei beim Auftragen das Profil der Verschleißplatte gebildet wird.

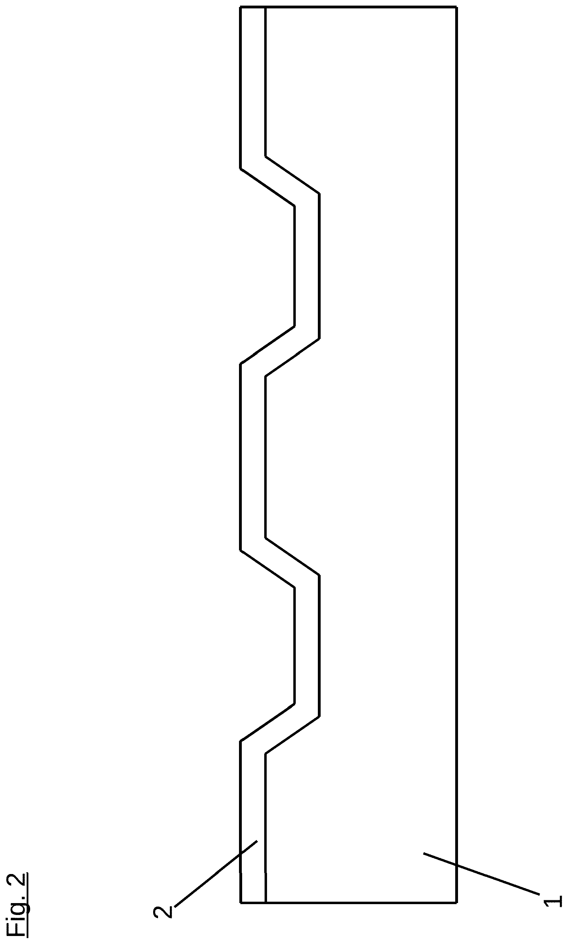

Im Beispiel gemäß Fig. 2 ist dagegen das Profil schon in dem Träger 1 angelegt. Auf die profilierte Fläche des Trägers 1 ist durch das generative Verfahren eine gleichmäßig starke äußere Schicht aufgetragen, die dem Verlauf des im Träger angelegten Profils folgt.

In beiden Beispielen ist ein trapezförmiges Profil gewählt. Es können aber auch andere Profile gewählt werden.

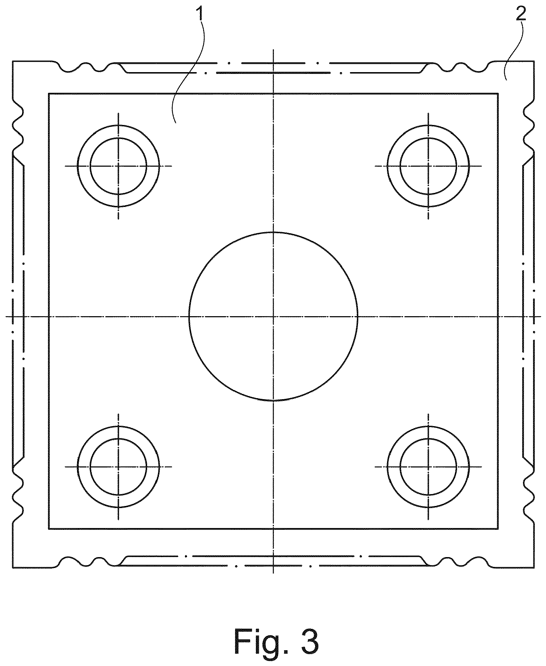

Das in Fig. 3 dargestellte Beispiel einer Druckplatte eines Endverdichters weist eine Frontseite auf, die gegen den Schrott gepresst wird. Die dazu senkrechten Seitenflächen der Druckplatte sind gezahnt, weisen also eine profilierte Oberfläche auf. Die Druckplatte ist aus einem Träger 1 aus einem ersten Metall und einer äußeren Schicht 2 gebildet, die durch ein generatives Verfahren auf dem Träger 1 hergestellt wurde. Die gezahnten Seitenflächen stehen bei den Pressvorgängen auf den Profilen der Verschleißplatten und werden auf diesen Verschleißplatten verschoben, wodurch sowohl die profilierten Oberflächen der Verschleißplatten als auch die profilierten, gezahnten Seitenflächen der Druckplatten einem besonderen Verschleiß ausgesetzt sind, der durch die Verwendung des zweiten Metalls gemildert wird.

Zusätzlich zu den gezahnten Seitenflächen kann auch die Frontseite der Druckplatte mit einer äußeren Schicht aus dem zweiten Metall versehen sein, um Beschädigungen der Frontseite durch den Schrott zu verringern. Das gilt insbesondere für die Fälle, in denen auch die Frontseiten der Druckplatten mit einer profilierten Oberfläche versehen sind, was insbesondere bei Druckplatten eines Vorverdichters und eines Zwischenverdichters der Fall sein kann.

## Patentansprüche

1. Verschleißblech oder Druckplatte für Paketierpressen, wobei das Verschleißblech oder die Druckplatte einen Träger (1) aus einem ersten Metall und eine auf den Träger (1) durch ein generatives Fertigungsverfahren aufgetragene und mit diesem fest verbundene äußere Schicht (2) aus einem zweiten Metall umfasst, wobei die äußere Schicht (2) eine höhere Härte hat als der Träger (1) und die profilierte Oberfläche des Verschleißblechs oder der Druckplatte durch eine Außenfläche der äußeren Schicht (2) gebildet ist.

2. Verschleißblech oder Druckplatte nach Anspruch 1, **dadurch gekennzeichnet, dass** der Träger (1) zumindest eine mit einem Profil versehene Fläche hat, auf die die äußere Schicht (2) aufgetragen ist.

3. Verschleißblech oder Druckplatte nach Anspruch 2, **dadurch gekennzeichnet, dass** die äußere Schicht (2) eine gleichmäßige Schichtstärke hat.

4. Verschleißblech oder Druckplatte nach Anspruch 1, **dadurch gekennzeichnet, dass** der Träger (1) zumindest eine ebene Oberfläche hat, auf die die äußere Schicht (2) aufgetragen ist, wobei das Profil der Oberfläche des Verschleißblechs oder der Druckplatte durch eine ungleichmäßig Schichtstärke der äußeren Schicht (2) gebildet ist.

5. Verschleißblech oder Druckplatte nach einem der Ansprüche 1 bis 3, **dadurch gekennzeichnet, dass** die äußere Schicht (2) durch selektives Laserschmelzen, durch selektives Elektronenstrahlschmelzen oder durch selektives Lasersintern auf den Träger (1) aufgetragen ist.

6. Verschleißblech oder Druckplatte nach einem der Ansprüche 1 bis 4, **dadurch gekennzeichnet, dass** der Träger (1) eine Platte ist.

7. Verschleißblech oder Druckplatte nach einem der Ansprüche 1 bis 5, **dadurch gekennzeichnet, dass** das Profil ein Wellenprofil, ein Trapezprofil, ein Dreiecksprofil oder eine Mischung aus mehreren Profilen, insbesondere den vorgenannten Profilen ist.

8. Verfahren zur Herstellung von Verschleißblechen für Schrottpressen nach einem der Ansprüche 1 bis 7, **dadurch gekennzeichnet, dass** durch ein generatives Fertigungsverfahren ein Pulver aus einem zweiten Metall als äußere Schicht (2) auf einen Träger (1) aus einem ersten Metall aufgetragen wird.

9. Verfahren nach Anspruch 8, **dadurch gekennzeichnet, dass** der Träger (1) eine ebene Oberfläche hat, auf welcher die äußere Schicht (2) aufgetragen wird.

10. Verfahren nach Anspruch 9, **dadurch gekennzeichnet, dass** durch das generative Fertigen der äußeren Schicht das Verschleißblech die profilierte Oberfläche erhält.

11. Verfahren nach Anspruch 8, **dadurch gekennzeichnet, dass** der Träger (1) eine profilierte Oberfläche hat, auf welcher die äußere Schicht mit einer gleichmäßigen Schichtstärke aufgetragen ist.

12. Paketierpresse mit einem Aufnahmeraum für Schrott und mit einem oder mehreren Verdichtern, wobei der Aufnahmeraum für den Schrott mit austauschbaren Verschleißblechen ausgekleidet ist, die ein Rillenprofil haben, und die Verdichter austauschbare Druckplatten aufweisen, die gezahnte Seitenflächen haben, die in den Rillenprofilen der Verschleißbleche verschiebbar sind, **dadurch gekennzeichnet, dass** die Verschleißbleche und/oder die Druckplatten Verschleißbleche und/oder die Druckplatten nach einem der Ansprüche 1 bis 7 sind und dass eine mit einem Rillenprofil versehene Seite der Verschleißbleche und die gezahnte Seitenfläche der Druckplatten durch die äußere Schicht des Verschleißblechs oder der Druckplatte gebildet ist.

## Claims

1. Wear plate or pressure plate for packaging presses, wherein the wear plate or the pressure plate comprises a carrier (1) made of a first metal and an outer layer (2) made of a second metal applied to the carrier (1) by a generative manufacturing method and fixedly connected thereto, wherein the outer layer (2) has a higher hardness than the carrier (1) and the profiled surface of the wear plate or the pressure plate is formed by an outer surface of the outer layer (2).

2. Wear plate or pressure plate according to claim 1, **characterised in that** the carrier (1) has at least one surface provided with a profile, on which the outer layer (2) is applied.

3. Wear plate or pressure plate according to claim 2, **characterised in that** the outer layer (2) has a uniform layer thickness.

4. Wear plate or pressure plate according to claim 1, **characterised in that** the carrier (1) has at least one planar surface on which the outer layer (2) is applied, wherein the profile of the surface of the wear plate or the pressure plate is formed by a non-uniform layer thickness of the outer layer (2).

5. Wear plate or pressure plate according to one of claims 1 to 3, **characterised in that** the outer layer (2) is applied to the carrier (1) by selective laser melting, by selective electron beam melting or by selective laser sintering.

6. Wear plate or pressure plate according to one of claims 1 to 4, **characterised in that** the carrier (1) is a plate.

7. Wear plate or pressure plate according to one of claims 1 to 5, **characterised in that** the profile is a corrugated profile, a trapezoidal profile, a triangular profile or a mixture of several profiles, in particular the above-mentioned profiles.

8. Method for manufacturing wear plates for scrap presses according to one of claims 1 to 7, **characterised in that** by means of a generative manufacturing process, a powder of a second metal is applied as the outer layer (2) on a carrier (1) of a first metal.

9. Method according to claim 8, **characterised in that** the carrier (1) has a planar surface on which the outer layer (2) is applied.

10. Method according to claim 9, **characterised in that** by the generative manufacturing of the outer layer, the wear plate acquires the profiled surface.

11. Method according to claim 8, **characterised in that** the carrier (1) has a profiled surface on which the outer layer is applied with a uniform layer thickness.

12. Packaging press having a scrap receiving space and having one or several compressors, wherein the scrap receiving space has cladding of replaceable wear plates, having a grooved profile, and the compressors having replaceable pressure plates having serrated side surfaces that can slide in the grooved profiles of the wear plates, **characterised in that** the wear plates and/or the pressure plates are wear plates and/or the pressure plates according to one of claims 1 to 7 and that a side of the wear plates provided with a grooved profile and the toothed side surface of the pressure plates is formed by the outer layer of the wear plate or the pressure plate.

## Revendications

1. Tôle d'usure ou plaque de pression pour presses à empaqueter, dans laquelle la tôle d'usure ou la plaque de pression comprend un support (1) en un premier métal et une couche externe (2) en un second métal appliquée sur le support (1) par un procédé de fabrication génératif et assemblée définitivement à celui-ci et dans laquelle la couche externe (2) a une plus grande dureté que le support (1) et la surface profilée de la tôle d'usure ou de la plaque de pression est formée par une surface extérieure de la couche externe (2).

2. Tôle d'usure ou plaque de pression selon la revendication 1, **caractérisée en ce que** le support (1) a au moins une surface qui est munie d'un profil et qui est appliquée sur la couche externe (2).

3. Tôle d'usure ou plaque de pression selon la revendication 2, **caractérisée en ce que** la couche externe (2) a une épaisseur de couche régulière.

4. Tôle d'usure ou plaque de pression selon la revendication 1, **caractérisée en ce que** le support (1) a au moins une surface plane sur laquelle la couche externe (2) est appliquée, dans laquelle le profil de la surface de la tôle d'usure ou de la plaque de pression est formé par une épaisseur de couche irrégulière de la couche externe (2).

5. Tôle d'usure ou plaque de pression selon l'une quelconque des revendications 1 à 3, **caractérisée en ce que** la couche externe (2) est appliquée sur le support (1) par fusion sélective au laser, par fusion sélective au faisceau électrique ou par frittage sélectif au laser.

6. Tôle d'usure ou plaque de pression selon l'une quelconque des revendications 1 à 4, **caractérisée en ce que** le support (1) est une plaque.

7. Tôle d'usure ou plaque de pression selon l'une quelconque des revendications 1 à 5, **caractérisée en ce que** le profil est un profil ondulé, un profil trapézoïdal, un profil triangulaire ou un mélange de plusieurs profils, en particulier des profils susmentionnés.

8. Procédé de fabrication de tôles pour des presses à ferrailles selon l'une quelconque des revendications 1 à 7, **caractérisé en ce qu'**une poudre en un second métal est appliquée par un procédé de fabrication génératif comme couche externe (2) sur un support (1) en un premier métal.

9. Procédé selon la revendication 8, **caractérisé en ce que** le support (1) a une surface plane sur laquelle la couche externe (2) est appliquée.

10. Procédé selon la revendication 9, **caractérisé en ce que** la tôle d'usure obtient la surface profilée par la fabrication générative de la couche externe.

11. Procédé selon la revendication 8, **caractérisé en ce que** le support (1) a une surface profilée sur laquelle la couche externe est appliquée avec une épaisseur de couche régulière.

12. Presse à empaqueter avec un espace de réception pour de la ferraille et avec un ou plusieurs compacteurs, dans laquelle l'espace de réception pour la ferraille est revêtu de tôles d'usure échangeables qui ont un profil rainuré et dans laquelle les compacteurs comportent des plaques de pression échangeables qui ont des surfaces latérales dentées déplaçables dans les profils rainurés des tôles d'usure, **caractérisée en ce que** les tôles d'usure et/ou les plaques de pression sont des tôles d'usure et/ou des plaques de pression selon l'une quelconque des revendications 1 à 7 et **en ce qu'**un côté des tôles d'usure qui est muni d'un profil rainuré et la surface latérale dentée des plaques de pression sont formés par la couche externe de la tôle d'usure ou de la plaque de pression.
